# FASCICULE DE BREVET EUROPEEN

(11) **EP 1 324 846 B1**
(45) Date de publication et mention de la délivrance du brevet: **25.04.2007**
(21) Numéro de dépôt: 01974386.3
(22) Date de dépôt: 20.09.2001
(51) Int. Cl.: B22F 9/10, G21C 3/60

(54) **PROCEDE DE PREPARATION DE PARTICULES DE METAL OU D'ALLIAGE DE METAL NUCLEAIRE.**
VERFAHREN ZUR HERSTELLUNG VON PULVER AUS KERNBRENNSTOFFMETALL ODER -METALLLEGIERUNG
METHOD FOR PREPARING NUCLEAR METAL OR METAL ALLOY PARTICLES

(30) Priorité: 21.09.2000 FR 0012046
(43) Date de publication de la demande: 09.07.2003
(73) Titulaire: COMMISSARIAT A L'ENERGIE ATOMIQUE, 75015 Paris (FR); Société Technique pour l'Energie Atomique TECHNICATOME, 91192 Gif sur Yvette Cedex (FR); Areva NP, 92400 Courbevoie (FR); Compagnie pour l'etude et la réalisation de combustibles atomiques, 92400 Paris Cedex (FR)
(72) Inventeur: REVOL, Stéphane, F-38340 POMMIERS-la-PLACETTE (FR); BACCINO, Régis, F-38410 SAINT-MARTIN-d'URIAGE (FR)
(74) Mandataire: Audier, Philippe André
(86) Numéro de dépôt international: PCT/FR2001/002926
(87) Numéro de publication internationale: WO 2002/024384

(56) Documents cités:
- US-A- 2 356 599
- US-A- 5 978 432
- PATENT ABSTRACTS OF JAPAN vol. 004, no. 096 (M-020), 11 juillet 1980 (1980-07-11) & JP 55 054508 A (TOYOTA MOTOR CORP), 21 avril 1980 (1980-04-21) cité dans la demande
- PATENT ABSTRACTS OF JAPAN vol. 013, no. 244 (M-834), 7 juin 1989 (1989-06-07) & JP 01 052006 A (KUBOTA LTD), 28 février 1989 (1989-02-28)

## Description

L'invention concerne un procédé de préparation de particules, en particulier d'une poudre, de métal ou d'alliage de métal nucléaire, l'invention s'applique, en particulier, à la préparation d'une poudre d'alliage UMo.

Dans l'industrie du nucléaire, de nombreux métaux ou alliages métalliques doivent être préparés sous la forme de poudres.

Ainsi, en particulier, l'industrie du nucléaire développe-t-elle de nouveaux combustibles à faible enrichissement et présentant des facilités pour le retraitement. Ces combustibles se présentent notamment sous forme de composite à matrice métallique. Les alliages utilisés dans ces combustibles doivent être élaborés sous forme de poudres fines pour pouvoir être mélangés avec un matériau de forte conductivité thermique, comme par exemple l'aluminium.

Un alliage répondant complètement aux besoins exprimés pour une utilisation dans ces combustibles est le UMo.

De nombreux procédés peuvent être utilisés pour préparer des poudres de métaux ou d'alliages nucléaires, tels que le UMo.

Toutefois, tout d'abord, il faut noter que les techniques de broyage largement utilisées pour les combustibles siliciures ne sont pas transposables aux métaux ou aux alliages strictement métalliques, comme le UMo.

La production de poudres de métaux ou d'alliages nucléaires, comme le UMo, peut donc actuellement être réalisée par différents procédés, dont aucun ne s'avère satisfaisant pour la production industrielle de poudres.

Ainsi, le procédé d'atomisation par plateau tournant conduit à l'obtention d'une poudre complètement sphérique avec une pollution en oxygène très faible.

Un tel procédé est décrit dans le document US-A-5 978 432 de C. K. KIM et al..
Afin de préparer un alliage d'uranium, par exemple un alliage d'uranium à 8 % en poids de molybdène, l'uranium et l'élément d'alliage sont pesés et placés dans un creuset chauffé par un générateur haute fréquence. Lorsque la température est suffisamment élevée, on fait s'écouler par un orifice la masse de métaux fondus qui est déversée sur un disque tournant situé dans une enceinte d'atomisation sous vide. La vitesse de rotation du disque tournant est d'environ 30 000 tours par minute.

La masse fondue est divisée par la force centrifuge du disque tournant et forme de fines gouttelettes qui volent, au travers d'un gaz de refroidissement, vers la paroi de l'enceinte. La poudre atomisée est récupérée dans un réservoir situé à la base de l'enceinte. La poudre est ensuite mélangée avec de la poudre d'aluminium et compactée pour préparer le combustible nucléaire.

Ce procédé est un procédé très performant et très sensible, qui présente des inconvénients importants lors de son exploitation, qui sont, entre autres : le fait de réaliser l'atomisation dans une enceinte à vide, l'encombrement important du dispositif qui ne permet pas de fonctionner en géométrie sûre, les possibilités de rétention importantes associées à un nettoyage difficile de la machine qui rendent difficile le fonctionnement en masse sûre, et un fonctionnement extrêmement délicat.

D'autre part, la mise en oeuvre d'un plateau tournant à des vitesses très élevées pouvant atteindre environ 30 000 tours par minute et jusqu'à 50 000 tours par minute en milieu nucléaire, est une contrainte forte.

Selon un autre procédé canadien, la poudre peut être obtenue par l'usinage de copeaux, qui sont ensuite traités pour modifier leur morphologie en supprimant les angles vifs. Ce type de procédé conduit à une pollution très forte de la poudre en fer, carbure ou nitrure, par exemple, qui ne peut pas être sans conséquences néfastes sur les propriétés finales du combustible.

D'autres procédés d'obtention de la poudre par des procédés chimiques existent comme le procédé argentin hydruration-déshydruration. Dans ce cas, la granulométrie de la poudre est difficile à contrôler, ce qui conduit à des problèmes de reproductibilité pour l'industrialisation. Des pollutions importantes de la poudre peuvent aussi être introduites au cours de ce traitement.

L'utilisation des procédés de type atomisation classique à l'eau ou au gaz conduit à la mise en oeuvre d'installations, présentant de nombreux inconvénients pour l'atomisation de matière nucléaire, entre autres, des encombrements très importants, de nombreuses possibilités de rétentions et une exploitation lourde. Ces procédés sont bien adaptés à la production de quantités importantes de poudre, par coulée, ce qui est interdit pour la matière nucléaire où l'application des règles de criticité a pour conséquence de limiter la quantité de matière transformable en poudre par coulée à quelques kilogrammes.

Autrement dit, les procédés classiques d'atomisation sont des procédés qui sont mal adaptés à la production de faibles quantités de poudres car un régime permanent doit être obtenu, ce qui nécessite un fonctionnement en régime transitoire d'une durée non négligeable. Dans tous les cas, la mise au point de ce type d'installation est délicate.

Le document JP-A-55 054508, décrit un appareil, dans lequel du métal en fusion contenu dans un creuset , tombe par gravité au travers d'un orifice prévu à la base dudit creuset, dans un réservoir qui tourne à grande vitesse.

Le métal en fusion tombe dans le réservoir, le long de la direction de rotation d'un milieu de refroidissement , tel que de l'eau, puis entre en collision avec celui-ci et se disperse sur sa surface.

Le métal en fusion est ainsi absorbé dans le milieu de refroidissement et est encore accéléré par la force centrifuge, moyennant quoi, il est refroidi rapidement (trempé) pour devenir de la poudre de métal.

Pendant cette opération, un gaz inerte est envoyé par des orifices d'alimentation situés dans l'arbre de rotation creux du réservoir, afin d'empêcher l'oxydation du métal en fusion.

Il n'est pas mentionné dans ce document que la fusion, elle-même, à l'intérieur du creuset est réalisée sous une atmosphère de gaz inerte.

De même, on ne peut pas considérer que le gaz inerte forme une enveloppe entourant l'écoulement de métal en fusion, mais plutôt que l'écoulement (qui n'est pas un jet) de métal en fusion est introduit dans des enceintes remplies de gaz inerte.

Enfin, on ne forme pas un jet de métal mais on crée plutôt un simple écoulement de métal en fusion sous la simple action de la gravité.

En définitive, les différentes techniques existantes ou en développement n'offrent pas des conditions d'élaboration satisfaisantes pour fabriquer industriellement de la poudre de métal ou d'alliage nucléaire, tel que le UMo.

En effet, un tel procédé de fabrication de poudre de métal ou d'alliage nucléaire, tel que UMo, destiné en particulier à la fabrication de combustible nucléaire doit satisfaire à un grand nombre de critères et répondre à de nombreuses contraintes et résoudre toute une série de problèmes.

Certains des critères, contraintes et problèmes sont consécutifs à la nature nucléaire du métal ou de l'alliage.
- Il ne faut atomiser par coulée qu'une faible quantité de matière, soit généralement environ quelques kilogrammes, à cause des contraintes de criticité ;
- le temps de cycle pour réaliser une coulée doit, par conséquent, être court et le procédé doit être stabilisé très rapidement pour minimiser les pertes ;
- on doit éviter toute rétention de matière nucléaire dans l'installation (de nouveau à cause des contraintes de criticité), d'où l'intérêt d'installations simples et compactes avec une indication précise de la position de la matière nucléaire et de sa quantité, à tout moment ;
- il faut enfin limiter au strict minimum la quantité d'effluent produite.

D'autres problèmes, critères et contraintes sont plutôt liés au fait que la poudre préparée est utilisée pour la fabrication de combustibles nucléaires sous forme de composite à matrice métallique, il est donc nécessaire :
- de ne pas avoir de pollution importante de la poudre, par exemple par l'oxygène ; en effet, en particulier l'uranium et ses alliages sont très oxydables, voire pyrophoriques ;
- d'obtenir une poudre avec un spectre granulométrique étroit.

Aucun des procédés décrits plus haut ne permet de répondre simultanément à l'ensemble de ces critères et contraintes.

Ainsi, par exemple, les procédés d'atomisation à l'eau existants, qui permettent d'obtenir une poudre non sphérique et des vitesses de refroidissement importantes, donc des encombrements réduits, grâce à l'absence de tour de refroidissement, ne peuvent malheureusement pas être utilisés pour la préparation de poudres de métaux ou d'alliages de métaux nucléaires car ils conduisent notamment à :
- une pollution en oxygène importante de la poudre ;
- des risques d'explosion de vapeur, liées à la présence simultanée d'alliage en fusion et d'eau ;
- des risques de criticité liés à la présence simultanée de quantités importantes d'eau et de matière nucléaire.

Il existe donc un besoin non encore satisfait pour un procédé de préparation d'une poudre de métal ou d'alliage métallique qui réponde à l'ensemble des contraintes, qui satisfasse à tous les critères et exigences définis ci-dessus, qui ne présente pas les inconvénients, défauts, désavantages, limitations des procédés de l'art antérieur et qui résolve les problèmes mentionnés plus haut, des procédés de l'art antérieur.

Le but de la présente invention est de fournir un procédé répondant, entre autres, à ces besoins. Ce but et d'autres encore sont atteints, conformément à l'invention, par un procédé de préparation de particules de métal ou d'alliage de métal nucléaire, dans lequel on réalise les étapes suivantes :
- on prépare par fusion une masse fluide du métal ou de l'alliage de métal ;
- on met la masse fluide du métal ou de l'alliage de métal sous la forme d'un jet du métal ou de l'alliage de métal en fusion par éjection de la masse fluide du métal ou de l'alliage au travers d'une buse ;
- on met en contact le jet avec un fluide de trempe animé d'un mouvement de rotation centrifuge, moyennant quoi on réalise l'atomisation en particules du jet du métal ou de l'alliage de métal en fusion, et la trempe rapide des particules ;
- la fusion étant réalisée sous atmosphère de gaz inerte, et le jet du métal ou de l'alliage de métal en fusion étant entouré jusqu'à l'atomisation par une enveloppe (gaine) de gaz inerte.

Selon l'invention la masse fluide du métal ou de l'alliage de métal est mise sous la forme d'un jet du métal ou de l'alliage du métal par éjection, de la masse fluide du métal ou de l'alliage du métal au travers d'une buse, ce qui est fondamentalement différent de l'art antérieur où l'on met en oeuvre un simple écoulement par gravité du métal ou de l'alliage de métal en fusion.

L'enveloppe ou gaine de gaz inerte qui entoure le jet du métal ou de l'alliage de métal en fusion est avantageusement formé en éjectant, expulsant, le gaz inerte par un orifice, de préférence circulaire, entourant l'orifice de la buse simultanément à l'éjection, l'expulsion du jet de métal ou de l'alliage de métal par cette buse.

De préférence, cet orifice est centré sur la buse ou plus exactement sur l'orifice de la buse.

Avantageusement, la quantité de fluide de trempe, utilisée pour l'atomisation, est une quantité faible et finie, généralement inférieure ou égale à deux litres.

Avantageusement, le fluide de trempe est de l'eau ou de l'argon liquide.

De préférence, la zone dans laquelle se produit la fusion et la zone dans laquelle se produit l'atomisation sont physiquement séparées.

Le procédé selon l'invention permet pour la première fois, à l'échelle industrielle, la fabrication de particules, en particulier d'une poudre de métal ou d'alliage nucléaire, satisfaisant tous les critères et répondant à toutes les contraintes énoncées plus haut.

En particulier, le procédé selon l'invention triomphe d'un procédé largement répandu dans ce domaine de la technique, selon lequel, la technique de l'atomisation par un fluide, par exemple la technique d'atomisation à l'eau, ne pouvait en aucun cas être utilisée pour la préparation de particules de métaux ou d'alliages nucléaires.

Le procédé, selon l'invention, va à l'encontre et triomphe de ce préjugé, grâce à ses caractéristiques spécifiques qui permettent précisément d'appliquer l'atomisation par un fluide aux métaux ou alliages nucléaires.

Il n'était absolument pas évident de transposer cette technique appliquée couramment à des métaux et alliages classiques aux métaux, et alliages nucléaires, du fait des problèmes extrêmement spécifiques qui se posent pour l'atomisation de ces métaux et alliages.

Selon le procédé de l'invention, l'oxydation du métal ou de l'alliage est limitée à un taux faible, en maintenant le jet de métal ou d'alliage en fusion sous une atmosphère de gaz inerte, tel que de l'argon, généralement à hygrométrie contrôlée, lors de la fusion et en entourant le jet de métal ou d'alliage, depuis la fusion, jusqu'au début effectif de l'atomisation par une enveloppe, une gaine de ce même gaz inerte.

L'oxydation est également limitée à un taux faible en appliquant, dès le début de l'atomisation, une vitesse de trempe ultra rapide, généralement de 10⁵ à 10⁶ K/s sur les particules créées.

L'enveloppe de gaz inerte est facilement formée en éjectant le gaz inerte par un orifice entourant l'orifice de la buse, simultanément à l'éjection, du jet du métal ou de l'alliage par cette buse.

En outre, l'utilisation pour la trempe rapide d'une quantité de fluide de trempe, de préférence d'eau, faible, finie, typiquement inférieure ou égale à 2 litres, est sans effet sur les risques de criticité, tandis que la séparation de la zone de fusion et de la zone d'atomisation joue un rôle fondamental pour interdire, dans toutes les situations, aussi bien en fonctionnement, normal, qu'accidentel, la chute d'une quantité significative de métal ou d'alliage dans le fluide de trempe, tel que l'eau.

En d'autres termes, le procédé de l'invention permet de préparer des particules de métal ou d'alliage nucléaire, tel que l'UMo, notamment sous la forme d'une poudre, convenant, en particulier, pour l'élaboration de combustible nucléaire, en répondant pleinement aux contraintes spécifiques liées à la manipulation de matière nucléaire.

Ainsi, entre autres avantages, le procédé de l'invention permet-il de préparer des particules, en particulier une poudre, avec un spectre granulométrique étroit, de telles tailles des particules facilitant les étapes ultérieures de préparation d'un combustible nucléaire.

Le procédé de l'invention se caractérise par une absence totale de rétention de matière nucléaire, une adéquation complète de la capacité de production avec les besoins nucléaires, une mise en oeuvre facile, fiable, et peu coûteuse, et, enfin, une quantité d'effluents très faible.

Par métal ou alliage nucléaire selon l'invention, on entend généralement tout métal ou alliage susceptible d'être employé, incorporé dans un combustible nucléaire.

Ce métal ou cet alliage sera donc généralement choisi parmi les actinides , tels que l'uranium, les lanthanides, et leurs alliages.

Parmi les alliages d'uranium, ses alliages avec le molybdène sont préférés.

L'invention concerne également un dispositif de préparation de particules de métal ou d'alliage nucléaire comprenant :
- des moyens pour préparer par fusion une masse fluide du métal ou de l'alliage ;
- des moyens pour mettre la masse fluide du métal ou de l'alliage de métal sous la forme d'un jet du métal ou de l'alliage en fusion par éjection de la masse fluide du métal ou de l'alliage au travers d'une buse ;
- des moyens pour animer un fluide de trempe d'un mouvement de rotation centrifuge et réaliser l'atomisation en particules du jet du métal ou de l'alliage de métal en fusion, et la trempe rapide des particules ;
- des moyens pour réaliser la fusion du métal ou de l'alliage de métal nucléaire sous atmosphère de gaz inerte, et des moyens pour entourer le jet du métal ou de l'alliage de métal en fusion d'une enveloppe de gaz inerte jusqu'à la trempe.

Avantageusement, le dispositif selon l'invention comprend, en outre, des moyens pour séparer physiquement la zone dans laquelle se produit la fusion de la zone dans laquelle se produit l'atomisation.

L'invention va maintenant être décrite plus en détail dans la description qui va suivre, donnée à titre illustratif et non limitatif, en référence au dessin joint, dans lequel :

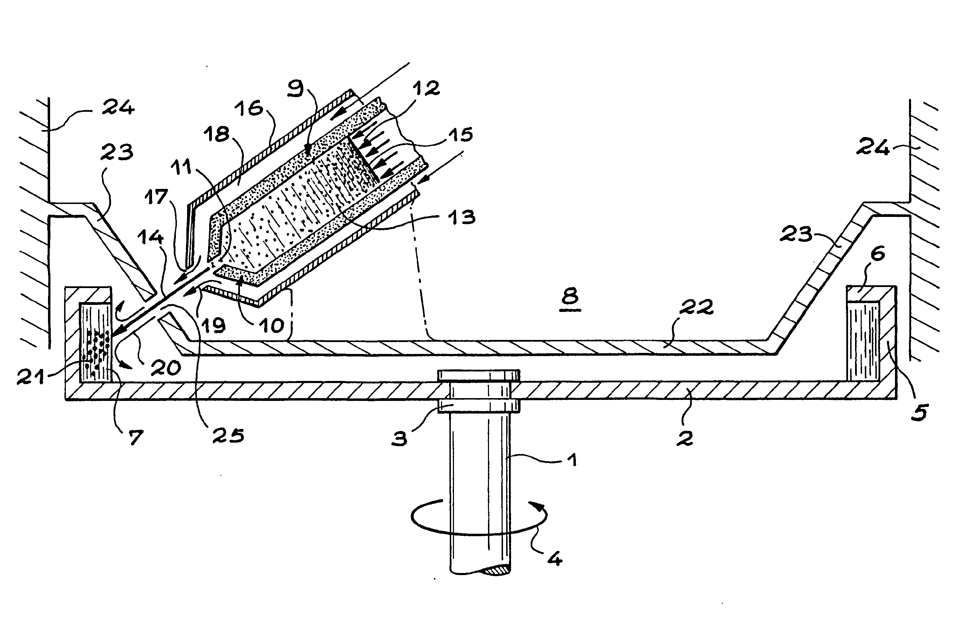

- la figure 1 est une vue en coupe schématique d'un dispositif selon l'invention.

Le dispositif selon l'invention est décrit sur la figure 1.

Ce dispositif est pour certains de ses aspects analogue à un dispositif classique de préparation de particules par trempe rapide et atomisation. Un tel dispositif est, par exemple, décrit dans le document EP-A-00 43345. On pourra se reporter, par exemple, à ce document pour obtenir une description plus détaillée de certains éléments du dispositif non spécifiques à la présente invention.

Le dispositif de la figure 1 comprend des moyens pour animer un fluide de trempe d'un mouvement de rotation centrifuge et réaliser la trempe rapide et l'atomisation d'un jet de métal ou d'alliage en fusion. Ces moyens sont représentés sur la figure 1 sous la forme d'un arbre (1) sensiblement vertical, auquel est fixé un tambour (2), ou coupe tournante horizontale, ayant sensiblement la forme d'un disque, ce disque étant fixé au centre de sa base audit arbre par tous moyens connus (3), par exemple, par soudage, boulonnage, filetage.

L'arbre (1) est entraîné en rotation (4) par des moyens adéquats, tels qu'un moteur électrique (non représenté). Le disque est muni à sa circonférence d'une paroi cylindrique (5) faisant saillie verticalement vers le haut et munie à son sommet d'une paroi horizontale (6) faisant saillie vers l'intérieur sur une courte distance pour former ainsi un rebord.

La paroi horizontale ou rebord et la paroi verticale permettent de contenir une faible quantité, finie (à savoir parfaitement déterminée), par exemple d'au maximum 2 litres, de fluide de trempe (7), tel que de l'eau, qui permet l'atomisation et la trempe rapide d'un jet de métal ou d'alliage en fusion.

Le fluide de trempe pourra être choisi parmi tous les liquides adéquats, mais l'eau est préférée ; l'eau peut être additionnée de un ou plusieurs adjuvants choisis, par exemple, parmi des solutions aqueuses de type électrolytique ou des solutions aqueuses de polymères.

Il pourra aussi être judicieux d'utiliser, par exemple, de l'argon liquide.

Le dispositif selon l'invention comprend également des moyens pour préparer, par fusion, une masse fluide de métal ou d'alliage en fusion. Ces moyens sont placés dans l'ouverture (8) définie par ledit rebord dans l'espace laissé libre par celui-ci. Ces moyens se présentent généralement sous la forme d'un creuset fixe (9), en matériau réfractaire, de forme généralement cylindrique, dont l'axe principal est incliné vers le bas, en direction de la paroi cylindrique du tambour. Le creuset peut être positionné au centre du disque, mais il est, de préférence, positionné de manière à être plus proche du bord de celui-ci.

L'extrémité inférieure (10) dudit creuset (9) est de forme généralement tronconique de diamètre allant en diminuant, jusqu'à une buse d'éjection prévu au centre de ladite portion tronconique et dirigée vers la paroi cylindrique verticale du tambour décrite ci-dessus. Le creuset est fixe et contient une masse de métal ou d'alliage de 0,1 à 5 kg. Au début du procédé, cette masse se présente sous la forme de lingots, copeaux, grains, ou autres.

Les moyens pour préparer, par fusion, une masse fluide du métal ou de l'alliage en fusion comprennent également des moyens de chauffage (non représentés), par exemple, sous la forme d'une bobine d'induction enroulée autour du creuset. Par masse fluide, on entend que la viscosité de ladite masse permet son écoulement facile et sa projection.

Le dispositif selon l'invention comprend des moyens pour mettre la masse fluide du métal ou de l'alliage de métal sous la forme d'un jet du métal ou de l'alliage en fusion.

Ainsi, on peut, pour cela, appliquer une pression d'éjection (12) sur la surface de la masse fluide du métal ou de l'alliage en fusion (13), qui va forcer la masse fluide au travers, de la buse, à la base du creuset, et la mettre sous la forme d'un jet (14), par exemple, de forme cylindrique, puisque l'orifice de la buse a généralement une section circulaire.

Par exemple, le diamètre du jet sera faible, par exemple, de l'ordre de 50 à 200 µm, de préférence d'environ 100 µm.

Avantageusement, la pression d'éjection appliquée est fournie par le gaz inerte, qui forme l'atmosphère dans laquelle est réalisée la fusion et qui forme aussi l'enveloppe ou gaine qui entoure le jet du métal ou de l'alliage en fusion.

Le jet de métal ou d'alliage en fusion peut être un jet continu, mais de préférence il s'agira d'un jet discontinu.

Le dispositif selon l'invention comprend aussi des moyens pour réaliser la fusion du métal ou de l'alliage de métal nucléaire sous atmosphère de gaz inerte et des moyens pour entourer le jet du métal ou de l'alliage de métal en fusion d'une enveloppe ou gaine de gaz inerte depuis la fusion jusqu'à la trempe.

Ainsi, sur la figure 1, un courant ou flux d'argon (12) sous pression est envoyé sur la surface supérieure (15) libre de la masse en fusion de métal ou d'alliage, le courant ou flux d'argon, comme on l'a vu plus haut, tout en maintenant cette masse fondue sous une atmosphère inerte fournit également la pression nécessaire à l'éjection de la masse fluide de métal ou d'alliage en fusion par l'orifice de la buse (11).

Comme gaz inerte, on pourra utiliser tout gaz ne réagissant pas avec les matériaux du dispositif et avec la masse de métal ou d'alliage en fusion. Ce gaz pourra ainsi être choisi parmi l'argon, l'azote, l'hélium.

Le gaz préféré est l'argon. De préférence, le gaz a une pression comprise entre 1 et 15 bars.

Les moyens pour entourer le jet de métal ou d'alliage en fusion d'une enveloppe de gaz inerte comprennent des moyens pour que le gaz inerte soit éjecté, de manière à entourer le jet de métal ou d'alliage en fusion qui est éjecté, par la buse située à la base du creuset.

Ainsi, il peut être prévu autour du creuset une enveloppe ou enceinte fixe (16) concentrique au creuset entourant celui-ci, de forme sensiblement analogue à celle du creuset, à savoir, par exemple, une enveloppe cylindrique, puis tronconique munie de même d'un orifice à sa base dont la forme est analogue à celle de la buse.

Ainsi, si la buse a un orifice circulaire, l'orifice de l'enveloppe sera, de même, circulaire avec un diamètre toutefois plus important que celui de l'orifice de la buse, de manière à laisser passer le jet de métal ou d'alliage en fusion.

Le creuset peut être réalisé en quartz ou en céramique, par exemple, en oxyde d'yttrium.

L'enceinte, encore appelée contre-creuset, peut être réalisée dans tout matériau adéquat, par exemple en quartz ou en céramique.

Le gaz inerte sous pression, issu de préférence de la même source que celle dont provient le gaz fournissant la pression d'éjection et l'atmosphère inerte dans le creuset, passe dans l'espace (18) défini entre le creuset et l'enveloppe, puis forme un jet, par exemple un jet annulaire (19) qui entoure le jet de métal ou d'alliage (14) à sa sortie de la buse du creuset.

Le jet de métal ou d'alliage en fusion gainé ainsi formé passe par l'orifice de l'enveloppe entourant le creuset, et le jet de métal ou d'alliage en fusion, toujours gainé de la sorte d'une enveloppe de gaz inerte, poursuit sa trajectoire généralement rectiligne jusqu'à ce qu'il heurte le rideau de fluide de trempe, tel que l'eau en mouvement centrifuge rapide. A titre d'exemple, la vitesse linéaire du fluide de trempe, tel que l'eau au point de contact est de 10 à 60 m/sec., par exemple, de 40 m/sec.

Au point de contact, l'enveloppe de gaz inerte entourant le jet de métal ou d'alliage en fusion est dévié (20), tandis que seul le jet de métal ou d'alliage en fusion pénètre dans la masse d'eau et est atomisé et trempé rapidement, de préférence, à la vitesse déjà indiquée plus haut.

Il se forme ainsi des particules (21).

Ces particules (21) peuvent être définies comme une poudre, c'est-à-dire que leur granulométrie est de préférence de 10 à 200 µm.

En outre, les particules ont une répartition granulométrique étroite, par exemple, comprise entre 10 et 120 µm pour des particules de taille moyenne de 60 µm.

La masse de poudre obtenue est généralement de 0,1 à 5 kg, ce qui limite les risques de criticité.

La poudre obtenue peut être récupérée en continu ou à la fin du procédé par des moyens non représentés.

Dans tous les cas, le temps nécessaire pour procéder à l'atomisation de la masse fondue contenue dans le creuset, qui est généralement de 1 à 30 mn, est court, par exemple de 1 à 15 mn. La position de la matière nucléaire est, en outre, exactement localisée à tout instant.

Avantageusement, le dispositif de l'invention, comme cela est représenté sur la figure 1, comprend des moyens pour séparer physiquement la zone dans laquelle se produit la fusion, c'est-à-dire essentiellement le creuset, de la zone dans laquelle se produit l'atomisation, c'est-à-dire essentiellement le fluide de trempe animé d'un mouvement de rotation centrifuge.

Ces moyens ont pour but d'empêcher la chute d'une masse importante de métal ou d'alliage en fusion dans le fluide de trempe.

Ces moyens permettent d'assurer la séparation complète des zones de fusion et d'atomisation en fonctionnement nominal, normal, mais aussi en fonctionnement accidentel, par exemple, lors d'une rupture du creuset.

Ces moyens comprennent essentiellement un diaphragme fixe (22) situé pour l'essentiel sous le creuset, ce diaphragme a sensiblement une forme correspondant à celle du tambour, à savoir une forme circulaire avec des bords inclinés, remontants (23), fixés à des supports fixes (24). Un de ces bords inclinés est percé d'un orifice (25) aligné avec les orifices de la buse et de l'enveloppe pour laisser passer le jet de métal ou d'alliage en fusion entouré de son enveloppe de gaz inerte.

Le diaphragme est généralement réalisé en un métal, tel que le cuivre recouvert de molybdène ou d'inox et est, de préférence, refroidi par des moyens connus, non représentés.

On peut, en outre, considérer que les moyens pour séparer physiquement la zone de fusion et la zone d'atomisation comprennent aussi le contre-creuset, décrit plus haut, qui permet la séparation essentiellement lors du fonctionnement nominal de l'installation.

Selon l'invention on crée un jet d'alliage ou de métal en fusion à la place d'un écoulement par gravité comme cela est le cas dans l'art antérieur.

Le fait de créer un jet d'alliage et non de mettre en oeuvre un écoulement par gravité présente les avantages suivants :

Tout d'abord, l'alliage de métaux ou le métal en fusion ne peut pas s'écouler par gravité à partir de la buse dans le liquide de trempe ce qui permet de travailler avec des métaux très réactifs comme le sont les alliages de métaux nucléaires.

En effet, en mettant le métal ou l'alliage de métaux en fusion sous forme de jet (c'est-à-dire en appliquant une pression à la surface du bain de métal d'alliage en fusion, et en procédant à une éjection au travers d'une buse de préférence de faible diamètre) les zones de fusion et de trempe peuvent avantageusement être séparées (voir figure). Uniquement un orifice de préfrence de faible diamètre (25) permet le passage du jet. En cas de dysfonctionnement (par exemple dû à un bouchage partiel de la buse ou à une rupture du creuset), le métal ou l'alliage en fusion ne s'écoulera pas par gravité dans le bain de trempe (ce qui pourrait produire une réaction violente comme une explosion vapeur) mais sera récupéré dans le diaphragme fixe (22). Dans la configuration du document JP-A-55 054508 il n'est pas possible de mettre en place une sécurité passive de ce type.

La création d'un jet de métal ou d'alliage permet en outre un contrôle précis de l'alimentation du métal ou de l'alliage de métaux en fusion du procédé. En effet, en mettant le métal ou l'alliage sous forme de jet on obtient un contrôle direct du débit du métal ou de l'alliage de métaux en fusion et du régime d'éjection (ce qui détermine la morphologie du jet en terme de discontinuité et de profil). L'écoulement par gravité de l'alliage dans le cas du brevet japonais Toyota cité ci-dessus, ne permet pas d'obtenir ce niveau de contrôle car le débit et la morphologie de l'écoulement sont dépendants du niveau du bain dans le creuset de fusion et d'instabilités aléatoires.

Dans notre cas, l'effet de l'évolution du niveau du bain est négligeable vis-à-vis de l'effet de la pression appliquée à la surface du bain qui est régulée.

De plus, le fonctionnement sous forme de jet permet de contrôler complètement le début de l'éjection et la fin par simple mise et retrait de la pression.

Or, l'application du procédé à des alliages de métaux nucléaires nécessite d'avoir des possibilités de contrôles du déroulement de l'éjection ce qui n'est pas le cas pour le brevet Toyota cité plus haut.

Enfin, la création d'un jet de métal ou d'alliage en fusion permet un contrôle précis de la taille des particules et permet d'obtenir une grande finesse des particules. La mise du métal ou de l'alliage en fusion sous forme de jet permet d'obtenir avant atomisation des particules un jet continu de dimension caractéristique proche par exemple de 150 microns. Ensuite, l'atomisation au contact du liquide de trempe (de 10 à 60 m/s de vitesse relative par exemple) permet d'obtenir des poudres de diamètre moyen allant typiquement de 50 à 200 microns par exemple.

Dans le brevet Toyota on peut estimer que les orifices ont un diamètre minimum de l'ordre de 0,5 mm minimum et que la vitesse relative est assez faible (les parois du liquide de trempe ne sont pas verticales) de 10 m/s maximum. Dans ce cas, les particules obtenues auront une dimension caractéristique, de l'ordre de 500 microns, soit beaucoup plus forte que celle que nous recherchons et sans possibilité de la réduire.

Une autre caractéristique essentielle du procédé de l'invention est la création d'une enveloppe de gaz inerte entourant complètement le jet de métal. Cette gaine de gaz inerte permet, selon l'invention, d'avoir une protection du jet optimal sans avoir à mettre l'ensemble de l'installation sous gaz neutre ce qui serait très coûteux en terme de machine et d'exploitation. En effet, le gainage permet d'apporter du gaz propre pour entourer le jet dès la sortie de la buse (zone la plus chaude donc zone où le métal ou l'alliage de métaux en fusion est le plus réactif) et de maintenir cette protection ensuite.

Dans le cas du brevet Toyota cité plus haut, le gaz est distribué à une distance importante du métal ou de l'alliage de métaux en fusion et peut donc être pollué avant d'être en contact avec le jet, par des vapeurs du liquide de trempe ou de l'air ambiant ayant pénétré par les ouvertures visibles de l'enceinte.

## Revendications

1. Procédé de préparation de particules de métal ou d'alliage de métal nucléaire, dans lequel on réalise les étapes suivantes :
- on prépare par fusion une masse fluide du métal ou de l'alliage ;
- on met la masse fluide du métal ou de l'alliage du métal sous la forme d'un jet du métal ou de l'alliage de métal en fusion par éjection de la masse fluide du métal ou de l'alliage au travers d'une buse grâce à l'application d'une pression d'éjection sur la surface de la masse fluide;
- on met en contact le jet avec un fluide de trempe animé d'un mouvement de rotation centrifuge, moyennant quoi, on réalise l'atomisation en particules du jet du métal ou de l'alliage de métal en fusion, et la trempe rapide des particules ;
- la fusion étant réalisée sous atmosphère de gaz inerte et le jet du métal ou de l'alliage de métal en fusion étant entouré jusqu'à l'atomisation par une enveloppe de gaz inerte.

2. Procédé selon la revendication 1, dans lequel l'enveloppe de gaz inerte est formée en éjectant le gaz inerte par un orifice, de préférence circulaire, entourant l'orifice de la buse, simultanément au jet du métal ou de l'alliage.

3. Procédé selon la revendication 2, dans lequel l'orifice par lequel est éjecté le gaz inerte est centré sur l'orifice de la buse.

4. Procédé selon la revendication 1, dans lequel la quantité de fluide de trempe est une quantité finie et faible.

5. Procédé selon la revendication 4, dans lequel la quantité de fluide de trempe est inférieure ou égale à 2 litres.

6. Procédé selon l'une quelconque des revendications 1 à 5, dans lequel le fluide de trempe est de l'eau ou de l'argon liquide.

7. Procédé selon l'une quelconque des revendications 1 à 6, dans lequel la zone dans laquelle se produit la fusion et la zone dans laquelle se produit l'atomisation sont physiquement séparées.

8. Procédé selon l'une quelconque des revendications 1 à 7, dans lequel le métal ou l'alliage nucléaire sont choisis parmi les actinides, tels que l'uranium, les lanthanides, et leurs alliages.

9. Procédé selon la revendication 8, dans lequel l'alliage nucléaire est choisi parmi les alliages de l'uranium avec le molybdène.

10. Dispositif de préparation de particules de métal ou d'alliage nucléaire comprenant :
- des moyens pour préparer par fusion une masse fluide du métal ou de l'alliage ;
- des moyens pour mettre la masse fluide du métal ou de l'alliage de métal sous la forme d'un jet du métal ou de l'alliage en fusion par éjection de la masse fluide du métal ou de l'alliage au travers d'une buse grâce à l'application d'une pression d'éjection sur la surface de la masse fluide;
- des moyens pour animer un fluide de trempe d'un mouvement de rotation centrifuge et réaliser l'atomisation en particules du jet du métal ou de l'alliage de métal en fusion, et la trempe rapide des particules ;
- des moyens pour réaliser la fusion du métal ou de l'alliage de métal nucléaire sous atmosphère de gaz inerte, et des moyens pour entourer le jet du métal ou de l'alliage de métal en fusion d'une enveloppe de gaz neutre jusqu'à la trempe.

11. Dispositif selon la revendication 10, comprenant, en outre :
- des moyens pour séparer physiquement la zone dans laquelle se produit la fusion de la zone dans laquelle se produit l'atomisation.

## Claims

1. Method to prepare nuclear metal or metal alloy particles, wherein the following steps are carried out:
- a fluid mass of the metal or metal alloy is prepared by melting:
- the fluid mass of the metal or metal alloy is converted into molten metal or metal alloy stream form by ejecting the fluid mass of metal or alloy through a nozzle due to the application of an ejection pressure to the surface of the fluid mass;
- the stream is brought into contact with a quenching fluid imparted with a centrifugal rotation movement, by means of which the atomization of the molten metal or metal alloy stream into particles and the quick quenching at the particles are carried out :
- the melting being carried out in an inert gas atmosphere, and the molten metal or metal alloy stream being surrounded by an inert gas envelope until atomization.

2. Method according to claim 1, wherein the inert gas envelope is formed by ejecting the inert gas through an orifice, preferentially circular, surrounding the orifice of the nozzle simultaneously with the metal or metal alloy stream.

3. Method according to claim 2, wherein the orifice through which the inert gas is ejected is centred on the nozzle orifice.

4. Method according to claim 1, wherein the quantity of quenching fluid is a finite, low quantity.

5. Method according to claim 4, wherein the quantity of quenching fluid is less than or equal to 2 litres.

6. Method according to any of claims 1 to 5, wherein the quenching fluid is water or liquid argon.

7. Method according to any of claims 1 to 6, wherein the area where melting lakes place and the area where atomization takes place are physically separated.

8. Method according to any of claims 1 to 7, wherein the nuclear metal or alloy is selected from the actinides, such as uranium, the lanthanides and their alloys.

9. Method according to claim 8, wherein the nuclear alloy is selected from the uranium alleys with molybdenum,

10. Device to prepare nuclear metal or alloy particles comprising:
- means to prepare a fluid mass of the metal or alloy by melting; means to put the fluid mass of the metal or metal alloy in the form of a molten metal or alloy stream by ejecting the fluid mass of metal or alloy through a nozzle due to the application of an ejection pressure to the surface of the fluid mass;
- means to impart a centrifugal rotation movement to a quenching fluid and carry out the atomization of the molten metal or metal alloy stream particles and the quick quenching of the particles;
- means to melt the nuclear metal or metal alloy in an inert gas atmosphere, and means to surround the molten metal or metal alloy stream by a neutral gas envelope until quenching.

11. Device according to claim 10, also comprising:
- means to physically separate the area wherein melting takes place from the area wherein atomization takes place.

## Patentansprüche

1. Verfahren zur Herstellung von nuklearen Metall- oder Metalllegierungs-Teilchen, bei dem man die folgenden Stufen durchführt:
- Herstellung einer fließfähigen Masse aus dem Metall oder der Metalllegierung durch Schmelzen;
- Überführung der fließfähigen Metall- oder Metalllegierungsmasse in die Form eines Strahls aus geschmolzenem Metall oder geschmolzener Metalllegierung durch Ejektion (Spritzen) der fließfähigen Metall- oder Metalllegierungsmasse durch eine Düse unter Anwendung eines Ejektions- bzw. Spritzdrucks auf die Oberfläche der fließfähigen Masse;
- Inkontaktbringen des Strahls mit einem Abschreckungsfluid, das mittels einer Zentrifuge in Rotation versetzt worden ist, um auf diese Weise eine Zerstäubung des Strahls aus dem geschmolzenen Metall oder der geschmolzenen Metalllegierung in Teilchen und die schnelle Abkühlung (Abschreckung) der Teilchen zu bewirken;
- wobei das Schmelzen in einer Inertgas-Atmosphäre durchgeführt wird und der Strahl aus dem geschmolzenen Metall oder der geschmolzenen Metalllegierung bis zur Zerstäubung von einer Inertgashülle umgeben ist.

2. Verfahren nach Anspruch 1, bei dem die Inertgashülle erzeugt wird, indem man durch eine Öffnung, die vorzugsweise kreisförmig ist und die Öffnung der Spritzdüse umgibt, gleichzeitig mit dem Metall- oder Metalllegierungsstrahl ein Inertgas ejiziert.

3. Verfahren nach Anspruch 2, bei dem die Öffnung, durch welche das Inertgas ejiziert wird, auf die Öffnung der Spritzdüse zentriert (ausgerichtet) ist.

4. Verfahren nach Anspruch 1, bei dem die Menge des Abschreckungsfluids eine endliche und geringe Menge ist.

5. Verfahren nach Anspruch 4, bei dem die Menge des Abschreckungsfluids zwei Liter oder weniger beträgt.

6. Verfahren nach einem der Ansprüche 1 bis 5, bei dem das Abschreckungsfluid Wasser oder flüssiges Argon ist.

7. Verfahren nach einem der Ansprüche 1 bis 6, bei dem die Zone, in der das Schmelzen erfolgt, und die Zone, in der die Zerstäubung durchgeführt wird, physikalisch voneinander getrennt sind.

8. Verfahren nach einem der Ansprüche 1 bis 7, bei dem das nukleare Metall oder die nukleare Metalllegierung ausgewählt wird aus den Actiniden wie Uran, den Lanthaniden und ihren Legierungen.

9. Verfahren nach Anspruch 8, bei dem die nukleare Legierung ausgewählt wird aus den Legierungen von Uran mit Molybdän.

10. Vorrichtung zur Herstellung von nuklearen Metall- oder Metalllegierungs-Teilchen, die umfasst:
- Einrichtungen zur Herstellung einer fließfähigen Metall- oder Metalllegierungsmasse durch Schmelzen;
- Einrichtungen zum Überführen der fließfähigen Metall- oder Metalllegierungsmasse in die Form eines Strahls aus dem geschmolzenen Metall oder der geschmolzenen Metalllegierung durch Ejektion (Spritzen) der fließfähigen Metall- oder Metalllegierungsmasse durch eine Spritzdüse unter Anwendung eines Spritz- bzw. Ejektionsdrucks auf die Oberfläche der fließfähigen Masse;
- Einrichtungen, um ein Kühl- bzw. Abschreckungsfluid in eine Zentrifugen-Rotationsbewegung zu versetzen und die Zerstäubung des Strahls aus geschmolzenem Metall oder geschmolzener Metalllegierung in Teilchen zu bewirken und die Teilchen schnell abzukühlen (abzuschrecken);
- Einrichtungen zum Durchführen des Schmelzens des nuklearen Metalls oder der nuklearen Metalllegierung in einer Inertgasatmosphäre und Einrichtungen, um den Strahl aus geschmolzenem Metall oder geschmolzener Metalllegierung bis zum Abschrecken mit einer Inertgashülle zu umgeben.

11. Vorrichtung nach Anspruch 10, die außerdem umfasst:
- Einrichtungen zum physikalischen Trennen der Zone, in der das Schmelzen durchgeführt wird, von der Zone, in der die Zerstäubung durchgeführt wird.
